Europäisches Patentamt

European Patent Office

Office européen des brevets

(19)

(11) Veröffentlichungsnummer: **0 004 640**
**B1**

(12) **EUROPÄISCHE PATENTSCHRIFT**

(45) Veröffentlichungstag der Patentschrift: **13.10.82**

(21) Anmeldenummer: **79100941.8**

(22) Anmeldetag: **29.03.79**

(51) Int. Cl.³: **C 08 G 18/14, C 08 K 3/00, C 08 J 9/30**

(54) Verfahren zur Herstellung von elastomeren Formteilen.

(30) Priorität: **11.04.78 US 895336**

(43) Veröffentlichungstag der Anmeldung:
**17.10.79 Patentblatt 79/21**

(45) Bekanntmachung des Hinweises auf die Patenterteilung:
**13.10.82 Patentblatt 82/41**

(84) Benannte Vertragsstaaten:
**BE DE FR GB IT NL SE**

(56) Entgegenhaltungen:
**DE - A - 2 119 722**
**DE - A - 2 024 810**
**DE - A - 2 317 152**
**DE - A - 2 622 951**

(73) Patentinhaber: **Mobay Chemical Corporation**
**Penn Lincoln Parkway West**
**Pittsburgh, Pennsylvania 15205 (US)**

(73) Patentinhaber: **GENERAL MOTORS CORPORATION**
**General Motors Building 3044 West Grand Boulevard**
**Detroit Michigan 48202 (US)**

(72) Erfinder: **Conover, Steven M.**
**130 Rae Avenue**
**Pittsburgh Pennsylvania 15228 (US)**
Erfinder: **Loring, Robert M.**
**1519 Main Boulevard**
**Library Pennsylvania 15129 (US)**
Erfinder: **Ludwico, William A.**
**1815 Edward Drive**
**Library Pennsylvania 15129 (US)**
Erfinder: **Arnold, John W.**
**2551 Mallard Court**
**West Bloomfield, Michigan 48022 (US)**
Erfinder: **Ferber, George**
**4746 Dickson Drive**
**Sterling Heights, Michigan 48077 (US)**

(74) Vertreter: **Gremm, Joachim, Dr. et al,**
**Bayer AG c/o Zentralbereich Patente, Marken und Lizenzen**
**D-5090 Leverkusen 1, Bayerwerk (DE)**

# 0 004 640

Verfahren zur Herstellung von elastomeren Formteilen

In den letzten Jahren besteht ein starkes Interesse für die Herstellung der verschiedensten Formteile nach dem sog. "Reaktionsspritzgießverfahren" ("reaction injection molding" process oder RIM-Verfahren). Bei diesem Verfahren wird eine geschlossene Form mit hochreaktionsfähigen flüssigen Ausgangskomponenten innerhalb sehr kurzer Zeit im allgemeinen unter Verwendung einer Hochleistungs-Hochdruckdosierapparatur nach Vermischung der Komponenten in sog. "zwangsgesteuerten" Mischköpgen gefüllt.

Das RIM-Verfahren ist allgemein bekannt. Eine ausführliche Beschreibung seiner Technologie findet sich beispeilsweise in den folgenden Veröffentlichungen:

Peichota/Rohr: "Integralschaumstoffe" Carl Hanser-Verlag, München/Wien 1975;
Propelka/Wharton: "Reaction Injection Molding in the Automotive Industry", Journal of Cell. Plastics, Vol. II, 2.11.1975
Knipp: "Plastics for Automobile Safety Bumpers", Journal of Cell. Plastics, 2.11.1973
Ludwico/Taylor: "The Bayflex 110 Systems—The New Generation of RIM Materials", Vortrag beim SAE Passenger Car Meeting in Detroit, September 1977.

Die Reaktionsspritzgießtechnik eignet sich zur Herstellung von großen Formkörpern mit einem Gewicht von 3 bis 10 kg oder mehr, z.B. flexiblen Autokarosserieteilen, die in der Motorindustrie auch als "weiche Front- und Heckteile", d.h. reversibel geformte Teile an der Vorder- und Rückseite von Motorfahrzeugen, bezeichnet werden.

Der folgende technische Fortschritt wird im allgemeinen durch das RIM-Verfahren erreicht: Große Mengen flüssiger, hochreaktionsfähiger Ausgangsmaterialien werden mechanisch in sehr kurzer Zeit (etwa 2 bis 4 Sekunden) zugeführt, gemischt und in eine geschlossene Form eingeführt, in der das Gemisch in einer Zeit (30 bis 120 Sekunden), die auch für Polyurethanmassen sehr kurz ist, zum fertigen Produkt gehärtet wird.

Die Verwirklichung dieser Technik erforderte eine Lösung der folgenden drei Probleme:

1. Angesichts der hohen Reaktionsfähigkeit der Ausgangskomponenten (Polyisocyanate und Verbindungen, die mit Polyisocyanaten reaktionsfähig sind) muß das Reaktionsgemisch in der kürzest möglichen Zeit, die die Aufrahmzeit (d.h. die Zeit zwischen dem Mischen der Reaktionsteilnehmer und den ersten sichtbaren Anzeichen einer Chemischen Reaktion) nicht überschreiten sollte, in die Form eingetragen werden. Dies erforderte die Entwicklung von Hochleistungs-Axial- und -Radialkolbenpumpen, die, in Hochdruckmaschinen eingebaut, zu einer Förderleistung von 2, 5 bis 6, 5 kg/Sekunde fähig waren. Maschinen dieses Typs sind heute bekannt und werden beispielsweise in den DE—OSen 1 778 060 und 2 146 054 beschrieben.

2. Die Herstellung fehlerfreier Formteile erforderte nicht nur eine exakte Dosierung der Komponenten, um sie während der gesamten Spritzdauer bei einem durch die gegebene Formulierung vorgeschriebenen bestimmten Mischungsverhältnis zu halten, sondern auch innige Vermischung der Komponenten vom ersten bis zum letzten Tropfen. Vollkommenes Mischen wird dadurch, daß die Komponenten auf Grund ihrer hohen Fließgeschwindigkeiten nur eine sehr kurze Verweilzeit in der Mischkammer des Mischkopfes haben, überaus stark erschwert. Dieses Problem konnte durch Verwendung der sog. zwangsgesteuerten "Mischköpfe", die nach dem Prinzip der Gegenstromeinspritzung arbeiten (siehe US-PSen 3 709 640 und 3 857 850 und DE-OSen 2 007 935 und 2 364 501), gelöst werden.

3. Wenn das Reaktionsgemisch in die geschlossene Form eintritt, verdrängt es die in der Form enthaltene Luft fast augenblicklich. Um sicherzustellen, daß dies nicht zu Lufteinschlüssen im Reaktionsgemisch und damit zu Fehlern im Endprodukt führt, muß die in die Form strömende Flüssigkeit die Luft gewissermaßen in Form einer "Strömungsfront" vor sich "herschieben" und sie durch vorbestimmte Schlitze ausstoßen. Um Vollständiges Fehlen von Turbulenz während des Füllens der Form zu gewährleisten, muß das Material über eine breite Front längs der Wand der Form in laminarem Strom in die Form eintreten. Dies wurde durch eine in den DE—OSen 2 348 658 und 2 348 608 beschriebene gewisse Technik des Einspritzens durch sog. "Filmangüsse" erreicht.

Trotz der zahlreichen Vorteile des RIM-Verfahrens sucht man ständig weiter nach schneller reagierenden Systemen, insbesondere für die Verwendung in Massenfertigungsindustrien, z.B. in der Automobilindustrie.

Vor kurzem wurde ein sehr aussichtsreiches reaktionsfähiges System entwickelt, das auf der Verwendung eines aktiven aromatischen Diamins mit wenigstens einem Alkylsubstituenten in o-Stellung zu einer ersten Aminogruppe und zwei Alkylsubstituenten in o-Stellung zu einer zweiten Aminogruppe basiert. Diese aktiven aromatischen Diamine werden im allgemeinen in Kombination mit organischen Polyisocyanaten, Hydroxylgruppen enthaltenden Materialien und Katalysatoren für die Reaktion zwischen Hydroxylgruppen und Isocyanatgruppen verwendet. Diese Systeme sind Gegenstand der DE—OS 2 622 951 und der vorstehend genannten Veröffentlichung von Ludwico/Taylor. Diese Vorveröffentlichung erwähnt zwar sowohl die Möglichkeit der Mitverwendung von oberflächenaktiven Füllstoffen als auch der Verwendung von Luft als Treibmittel (Hinweis auf Kunststoffhandbuch, Band VII, Seite 109, Zeile 3), jedoch nicht, daß es zweckmäßig sein würde, zur Beschleunigung des Übergangs der Luft und/oder des Stickstoffs aus dem gelösten Zustand in den dispergierten Zustand äußerst geringe Mengen oberflächenaktiver Substanzen, entsprechend dem nachstehend näher beschriebenen erfindungsgemäßen Verfahren einzusetzen.

Diese aktiven Systeme gelieren im übrigen bei der Vermischung der komponenten so schnell, daß die daraus hergestellten Endprodukte verhältnismäßig hohe Dichten (d.h. 1121 kg/m³) aufweisen, da übliche organische Treibmittel sich nicht schnell genug verflüchtigen, um eine Treibwirkung auszuüben. Demzufolge werden die verwendeten Formen im allgemeinen mit Überdosierung gefüllt, um einwandfreies Ausfüllen der Form sicherzustellen. Diese Überdosierung führt zwangsläufig zu a) einem Anstieg des Drucks in der Form, der erhöhte Schließdrücke erfordert, um die Form geschlossen zu halten, und b) sichtbaren Oberflächenfehlern. Die Oberflächenfehler sind zwar nicht von körperlicher Art (d.h. sie beeinträchtigen die Oberfläche nicht körperlich und verschlechtern nicht die physikalischen Eigenschaften), jedoch machen sie die Formteile durch ihre sichtbare Erscheinung für die Verwendung für die verschiedensten Zwecke, insbesondere für freiliegende Automobilteile, unnehmbar.

Es wäre erwünscht, die Dichte der Produkte der vorstehend beschriebenen reaktionsfähigen Systeme zu verringern (beispielsweise auf etwa 961 kg/m³) und dabei gleichzeitig den Innendruck der Form zu senken und die Oberflächenfehler auszuschalten.

Da übliche organische Treibmittel unwirksam sind, wurde der Vorschlag gemacht, einer oder mehreren der Komponenten Luft und/oder Stickstoff unter Druck beizugeben. Dieser Vorschlag hatte einen gewissen Erfolg. Die Verwendung von Luft und/oder Stickstoff in Polyurethansystemen ist natürlich ebenso wie die zahlreichen verschiedenen Methoden zur Einführung von gelöster Luft und/oder gelöstem Stickstoff bekannt. Beispielsweise wird Luft und/oder Stickstoff direkt in die Mischkammer eingeführt und gleichzeitig mit dem reaktionsfähigen Gemisch gemischt. Zusätzlich werden Luft und/oder Stickstoff in eine oder mehrere der Komponenten eingeschlagen. Das gebildete cremige Gemisch wird dann mit Hilfe einer Pumpe in eine endgültige Mischkammer dosiert, wo es mit den anderen reaktionsfähigen Komponenten gemischt wird. Wenn die Dosierpumpe unter einem genügend hohen Druck fördert, löst sich die Gasmenge, die anfänglich in dem der Dosierpumpe zugeführten Ausgangsmaterial gelöst und/oder dispergiert ist, unter dem höheren Druck in sehr kurzer Zeit. Die dem Mischkopf zugeführte Flüssigkeit enthält dann Gas im gelösten Zustand. Bei der Einführung in den Mischkopf findet die Auflösung in sehr kurzer Zeit statt. Im allgemeinen wird das Gas in einer oder mehreren Komponenten gelöst. Weitere Methoden zur Auflösung von Gasen sind bekannt und werden beispielsweise in den DE—OSen 2 317 152 und 2 543 301 und in der US—PS 4 050 896 beschrieben.

Zwar wurde mit der Verwendung dieser gelösten Luft und/oder des gelösten Stickstoffs ein gewisser Erfolg bei den vorstehend genannten hochaktiven Systemen erzielt, jedoch wurde festgestellt, daß die erhaltenen Formteile zwar eine verringerte Dichte aufwiesen (beispielsweise 993 bis 1089 kg/m³), die Dichten in einem Formkörper jedoch unterschiedlich waren.

Wie bereits erwähnt, werden Luft und/oder Stickstoff in einer oder mehreren Komponenten des Gemisches wirksam unter Druck gelöst. Es wurde festgestellt, daß, wenn dieser Druck entspannt wird (z.B. beim Durchgang der Komponenten durch den Mischkopf und in die Form), die Luft und/oder der Stickstoff nicht unmittelbar aus dem gelösten Zustand in den dispergierten Zustand übergehen. Es wird angenommen, daß ein Zustand der übersättigung im flüssigen Reaktionssystem, das das gelöste Gas enthält, während einer gewissen begrenzten Zeit vorliegt. Bei diesen hochreaktionsfähigen System ist dieser Verzug beim Übergang vom gelösten in den dispergierten Zustand so lang, daß gelbildung in der Form vor dem eigentlichen Schäumvorgang stattfindet.

Durch das nachstehend beschriebene erfindungsgemäße Verfahren werden alle vorstehend genannten Probleme im wesentlichen gelöst und ausgeschaltet. Der wesentliche Gesichtspunkt des erfindungsgemäßen Verfahrens ist darin zu sehen, daß man einer der Aufbaukomponenten, die die Luft und/oder den Stickstoff gelöst enthalten ein oberflächenaktives Mittel hinzufügt, um den Übergang der Luft und/oder des Stickstoffs aus dem gelösten Zustand in den dispergierten Zustant zu beschleunigen. Diese Funktion der oberflächenaktiven Substanzen ist grundsätzlich verschieden von der Funktion gleicher oder ähnlicher Substanzen beim Verfahren der DE—OS 2 119 722. Beim Verfahren dieser Vorveröffentlichung erfolgt nämlich die Mitverwendung der Zusatzmittel, um das Gas adsorptiv zu binden und nicht, um den Übergang des Gases vom gelösten in den dispergierten Zustand zu beschleunigen. Die DE—OS 2 119 722 kann daher auch keinerlei richtungsweisenden Hinweise auf das erfindungsgemäße Verfahren vermitteln.

Gegenstand der Erfindung ist ein Verfahren zur Herstellung von elastomeren Formteilen, wobei man

A) in eine geschlossene Form ein Reaktionsgemisch einführt, das
    a) ein organisches Polyisocyanat,
    b) eine Hydroxylgruppen enthaltende Verbindung mit einem Molekulargewicht von 1800 bis 12.000,
    c) einen Katalysator für die Reaktion zwischen Hydroxylgruppen und Isocyanatgruppen,
    d) ein aktives aromatisches Diamin mit wenigstens einem Akylsubstituenten in o-Stellung zu einer ersten Aminogruppe und zwei Alkylsubstituenten in o-Stellung zu einer zweiten Aminogruppe und

e) Luft und/oder Stickstoff, die bzw. der unter Druck in einer oder mehreren der Komponenten (a), (b), (c) oder (d) gelöst sind, enthält,

B) das Reaktionsgemisch der Reaktion in der Form überläßt und

C) das gebildete Produkt entformt,

das dadurch gekennzeichnet ist,

daß man zusätzlich zu Beschleunigung des Übergangs der Luft und/oder Stickstoffs aus dem gelösten Zustand in den dispergierten Zustand bei der Entspannung des Drucks 0,01—1 Gew.-%, bezogen auf die Menge der Komponente (b), eines anorganischen, feinteiligen, Stickstoff adsorbierenden Mittels verwendet, das einer der Komponenten (a), (b), (c) oder (d), die die Luft und/oder den Stickstoff gelöst enthält zugesetzt wird.

Es wurde gefunden, daß durch Verwendung der vorstehend genannten anorganischen, feinteiligen, Stickstoff adsorbierenden Mittel 1) die Treibwirkung der Luft und/oder des Stickstoffs bedeutend gesteigert, 2) gleichmäßige Dichte des Formteils erreicht, 3) eine Senkung des Innendrucks der Form ermöglicht wird und 4) Oberflächenfehler im wesentlichen ausgeschaltet werden. Diese Wirkungen werden auf Grund der Fähigkeit der Stickstoff adsorbierenden Mittel erzielt, den Übergang der Luft und/oder des Stickstoffs vom gelösten Zustand zum dispergierten Zustand zu beschleunigen, wenn der Druck entspannt wird.

Die für die Zwecke der Erfindung geeigneten Stickstoff adsorbierenden Mittel sind bekannt und werden von Kirk-Othmer in "Encyclopedia of Chemical Technology", zweite vollständig überarbeitete Auflage, Band 1, S. 460, und in Perry "Chemical Engineer's Handbook", 5. Auflage, S. 16-5 und 16-6, beschrieben. Als spezielle Beispiele geeigneter Stickstoff adsorbierender Mittel seien genannt: Aluminiumoxide, z.B. aktiviertes Aluminiumoxid, und aktivierter Bauxit, siliciumdioxidhaltige Adsorptionsmittel, z.B. Zeolithe, Aluminosilicate, säurebehandelte Tone, Magnesiumoxyd-Kieselgel und Fullererde, Kieselgel, Kohlenstoffe, z.B. Aktivkohle und Ruß, und Eisenoxide. Bevorzugt werden zur Zeit Aktivkohle und Eisenoxide. Die einzige Voraussetzung für geeignete Adsorptionsmittel ist im allgemeinen, daß sie eine verhältnismäßig große Oberfläche haben, die im allgemeinen größer als 10 $m^2/g$ ist, und daß sie die physikalischen Eigenschaften des Endprodukts nicht nachteilig beeinflussen. Im allgemeinen sind ferner die Materialien mit geringerer Schleifwirkung zweckmäßiger, um übermäßigen Verschleiß an einigen Hochdruckdosierpumpen zu vermeiden.

Im allgemeinen muß die verwendete Menge des Stickstoff adsorptionsmittels genügen, um die Treib- oder Schäumwirkung des Systems wesentlich zu steigern, wenn die Luft und/oder der Stickstoff in einer oder mehreren Komponenten unter Druck gelöst sind. Die erforderliche Mindestmenge kann somit in zweierlei Weise gekennzeichnet werden: a) als Menge, die genügt, um die Gasmenge zu verringern, die im System gelöst sein muß, um ein Formteil mit einem gegebenen spezifischen Gewicht zu erzielen, oder b) als Menge, die bei der gleichen Gasbeladung (d.h. mit gelöstem Gas) die Herstellung eines Endprodukts ermöglicht, das ein niedrigeres spezifisches Gewicht als ohne Verwendung eines Adsorptionsmittels hat. Die zugesetzte Menge liegt im Bereich von 0,01 bis 1 Gew.-%, bezogen auf die Menge des Hydroxylgruppen enthaltenden Materials. Vorzugsweise wird jedoch eine Menge von 0,1 bis 0,7 Gew.-% verwendet, wobei eine Menge von etwa 0,5 Gew.-% besonders bevorzugt wird. Im Gebrauch wird das Adsorptionsmittel lediglich der Komponente bzw. den Komponenten zugesetzt, in denen die Luft und/oder der Stickstoff gelöst werden sollen. Die Luft und/oder der Stickstoff werden dann nach bekannten Methoden gelöst.

Die als Ausgangskomponenten gemäß der Erfindung verwendeten Polyisocyanate können aliphatische, cycloaliphatische, araliphatische, aromatische oder heterocyclische Polyisocyanate sein (für die Zwecke der Erfindung umfaßt der Ausdruck "Polyisocyanat" alle Isocyanate mit zwei oder mehr Isocyanatgruppen), wie sie beispielsweise von W. Siefken in "Justus Liebigs Annalen der Chemie" 562, S. 75 bis 136, beschrieben werden. Als spezielle Beispiele seien genannt: Äthylendiisocyanat, Tetramethylen - 1,4 - diisocyanat, Hexamethylen - 1,6 - diisocyanat, Dodecan - 1,12 - diisocyanat, Cyclobutan - 1,3 - diisocyanat, Cyclohexan - 1,3- und -1,4 - diisocyanate und Gemische dieser Isomeren, 1 - Isocyanat - 3,3,5 - trimethyl - 5 - isocyanatomethyl - cyclohexan, Hexahydrotoluylen - 2,4 - diisocyanat und -2,6 - diisocyanat und Gemische dieser Isomeren, Hexahydrophenylen - 1,3 - diisocyanat und/oder -1,4 - diisocyanat, Perhydrodiphenylmethan - 2,4' - diisocyanat und/oder - 4,4' - diisocyanat, Toluylen - 2,4 - diisocyanat und -2,6 - diisocyanat und Gemische dieser Isomeren, Diphenylmethan - 2,4' - diisocyanat und/oder -4,4' - diisocyanat, Naphthylen - 1,5 - diisocyanat, Triphenylmethan - 4,4',4" - triisocyanat, Polyphenyl - polymethylenpolyisocyanate, die durch Anilin - Formaldehyd - Kondensation und anschließende Phosgenierung herstellbar sind, Polyisocyanate, die Carbodiimidgruppen enthalten, Polyisocyanate, die Allophanatgruppen enthalten, Polyisocyanate, die Isocyanuratgruppen enthalten, Urethangruppen enthaltende Polyisocyanate, acylierte Harnstoffgruppen enthaltende Polyisocyanate oder Biuretgruppen enthaltende Polyisocyanate.

Besonders geeignet für das Verfahren gemäß der Erfindung sind Diisocyanate oder Polyisocyanate auf der Basis von 4,4'-Diisocyanatodiphenylmethan. Reines 4,4' - Diisocyanatdiphenylmethan (Schmelzpunkt etwa 40°C) kann ebenfalls für die Zwecke der Erfindung verwendet werden.

Die bevorzugten Ausgangskomponenten (a) sind flüssige Polyisocyanate, die Urethangruppen enthalten und (wie beispielsweise in der DE—OS 1 618 380 beschrieben) durch Umsetzung von 1 Mol 4,4' - Diisocyanatodiphenylmethan mit 0,05 bis 0.3 Mol niedrigmolekularer Diole oder Triole, vorzugsweise mit Polypropylenglykolen mit einem Molekulargewicht von weniger als 700 hergestellt werden können, oder Carbodiimid- und/oder Uretonimingruppen enthaltende Diisocyanate auf Basis von Diphenylmethandiisocyanat, die gemäß der US—PS 3 152 162 herstellbar sind. Gemische der letztgenannten bevorzugten Polyisocyanate sind ebenfalls äußerst vorteilhaft. Aliphatische und cycloaliphatische Isocyanate sind im allgemeinen für die Zwecke der Erfindung weniger gut geeignet.

Als Komponente (b) werden beim Verfahren gemäß der Erfindung vorzugsweise Polyhydroxyverbindungen mit Molekulargewichten von 1800 bis 12.000, insbesondere von 3000 bis 7000, verwendet. Auch Polyäther sind für das Verfahren gemäß der Erfindung geeignet. Bevorzugt werden Polyäther mit wenigstens 2, vorzugsweise mit 2 oder 3 Hydroxylgruppen. Sie können hergestellt werden beispielsweise durch Polymerisation von Epoxiden, z.B. Äthylenoxid, Propylenoxid, Butylenoxid, Tetrahydrofuran, Styroloxid oder Epichlorhydrin, entweder allein beispielsweise in Gegenwart von $BF_3$ oder nach einem Verfahren der Chemischen Addition dieser Epoxide—wahlweise als Gemische oder aufeinanderfolgend—an Ausgangskomponenten, die reaktionsfähige Wasserstoffatome enthalten, z.B. Wasser, Ammoniak, Alkohole oder Amine. Beispiele geeigneter Ausgangskomponenten sind Äthylenglykol, Propylenglykol - (1,3) oder -(1,2), Trimethylolpropan, 4,4'-Dihydroxydiphenylpropan, Anilin, Äthanolamin oder Äthylendiamin. Saccharosepolyäther können ebenfalls im Rahmen der Erfindung verwendet werden. In vielen Fällen werden vorzugsweise Polyäther verwendet, die überwiegende Mengen primärer OH-Gruppen (bis zu 90 Gew.-%, bezogen auf alle im Polyäther vorhandenen OH-Gruppen) enthalten. Geeignet sind auch Polyäther, die mit Vinylpolymeren modifiziert sind.

Gemäß der Erfindung können jedoch auch Polyhydroxyverbindungen, die hochmolekulare Polyaddukte oder Polykondensate in feindispergierter Form oder in Lösung enthalten, verwendet werden. Diese modifizierten Polyhydroxyverbindungen werden erhalten, wenn Polyadditionsreaktionen (z.B. Reaktionen zwischen Polyisocyanaten und funktionellen Aminoverbindungen) oder Polykondensationsreaktionen (z.B. zwischen Formaldehyd und Phenolen und/oder Aminen) direkt in situ in den vorstehend genannten Hydroxyverbindungen durchgeführt werden.

Gemäß der Erfindung können Hydroxylgruppen enthaltende Polyester, Polythioäther, Polyacetale, Polycarbonate oder Polyesteramide des für die Herstellung von homogenen Polyurethanen und Polyurethan-Schaumstoffen bekannten Typs auch anstelle von Polyätherpolyolen oder zusammen mit ihnen verwendet werden.

Als Polyester, die Hydroxylgruppen enthalten, eignen sich beispielsweise Produkte der Reaktion von mehrwertigen (vorzugsweise zweiwertigen) Alkoholen gegebenenfalls unter Zugabe von dreiwertigen Alkoholen mit mehrbasischen (vorzugsweise zweibasischen) Carbonsäuren. An Stelle von freien Polycarbonsäuren können die entsprechenden Polycarbonsäureanhydride oder die entsprechenden Polycarbonsäureester von niederen Alkoholen oder ihre Gemische für die Herstellung der Polyester verwendet werden. Die Polycarbonsäuren können aliphatisch, cycloaliphatisch, aromatisch und/oder heterocyclish und beispielsweise mit Halogenatomen substituiert und/oder ungesättigt sein. Als Beispiele seien die folgenden Verbindungen genannt: Adipinsäure, Phthalsäure, Phthalsäureanhydrid, Tetahydrophthalsäureanhydrid, Hexahydrophthalsäureanhydrid, Maleinsäure, Maleinsäureanhydrid, säure, dimere und trimere Fettsäuren, z.B. Ölsäure, gegebenenfalls in Mischung mit monomeren Fettsäuren, Dimethylterephthalat und Terephthalsäure - bis - glykolester. Beispiele geeigneter mehrwertiger Alkohole sind Äthylenglykol, Propylenglykol - (1,2)- und -(1,3), Butylenglykol - (1,4) und -(2,3), Hexandiol - (1,6), Neopentylglykol, Cyclohexandimethanol, 2 - Methyl - 1,3 - propandiol, Glycerin, Trimethylolpropan, Hexantriol - (1,2,6), Methylglykosid, Diäthylenglykol, Triäthylenglykol, Tetraäthylenglykol, Polyäthylenglykole, Dipropylenglykol, Polypropylenglykole, Dibutylenglykol und Polybutylenglykole. Die Polyester können auch einen Anteil endständiger Carboxylgruppen enthalten. Polyester von Lactonen, z.B. $\varepsilon$ - Caprolacton, oder Hydroxycarbonsäuren, z.B. $\omega$ - Hydroxycapronsäure, können ebenfalls verwendet werden.

Hydroxylgruppen enthaltende Polycarbonate des bekannten Typs können verwendet werden. Äußerst vorteilhaft sind Polycarbonate, die durch Umsetzung von Diolen, z.B. Propandiol - (1,3), Butandiol - (1,4) und/oder Hexandiol - (1,6), Diäthylenglykol, Triäthylenglykol oder Tetraäthylenglykol, mit Diarylcarbonaten, z.B. Diphenylcarbonat, oder Phosgen hergestellt werden können.

Vertreter der funktionelle Hydroxylgruppen enthaltenden Verbindungen, die gemäß der Erfindung verwendet werden können, sind allgemein bekannt und werden beispielsweise in "High Polymers", Bd. XVI "Polyurethanes, Chemistry and Technology" von Saunders-Frisch, Interscience Publishers, New York—London, Bd. I, 1962, S. 32—42 und S. 44—54, und Bd. II, 1964, S. 5—6 und 198—199, und in Kunststoff-Handbuch, Bd. VII, Vieweg-Hochtlen, Carl-Hanser-Verlag, München 1966, S. 45—71, beschrieben.

Beim Verfahren gemäß der Erfindung besteht die Komponente (b) vorzugsweise ausschließlich aus den klassischen Polyätherpolyolen der Polyurethanchemie, die Molekulargewichte von 1800 bis 12.000, vorzugsweise von 3000 bis 7000 aufweisen und zwei oder insbesondere drei Hydroxylgruppen enthalten. Bevorzugt werden Gemische von Polyäthern mit zwei oder drei Hydroxylgruppen.

Die aktiven aromatischen Diamine sind vorzugsweise flüssig oder in der Polyolkomponente gelöst oder damit gemischt. Als "aktiv" sind Diamine zu verstehen, deren Reaktionsfähigkeit mit Isocyanaten nicht durch elektronenanziehende Substituenten, z.B. Halogen-, Ester, Äther- oder Disulfidgruppen, reduziert worden ist, wie es beispielsweise bei Methylen - bis - chloranilin (Moca) der Fall ist. Ferner fallen unter den Begriff "aktiv" keine Amine, die andere funktionelle Gruppen, die mit Isocyanaten reaktionsfähig sind, enthalten. Das aktive Diamin wird beim Verfahren gemäß der Erfindung im allgemeinen in Mengen von 5 bis 75 Gew.-%, vorzugsweise von 5 bis 35 Gew.-%, bezogen auf die Komponente (b), verwendet, wobei eine Menge von 8 bis 35 Gew.-% besonders bevorzugt wird.

Als besonders gut geeignet für das Verfahren gemäß der Erfindung erwiesen sich flüssige oder gelöste aromatische Amine, die wenigstens einen Alkylsubstituenten in o-Stellung zu einer ersten Aminogruppe und zwei Alkylsubstituenten in o-Stellung zu einer zweiten Aminogruppe enthalten. Als Beispiele seien gennant: 1,3 - Diäthyl - 2,4 - diaminobenzol, 2,4 - Diaminomesitylen, 1 - Methyl - 3,5 - diäthyl - 2,4 - diaminobenzol, 1 - Methyl - 3,5 - diäthyl - 2,6 - diaminobenzol, 1,3,5 - Triäthyl - 2,6 - diaminobenzol, 3,5,3',5' - Tetraäthyl - 4,4' - diaminodiphenylmethan u.dgl. Die vorstehend genannten aktiven aromatischen Amine können natürlich als Gemische miteinander oder in Kombination mit anderen aktiven aromatischen Aminen verwendet werden.

Bevorzugt werden im allgemeinen aromatische Diamine, die einen Alkylsubstituenten (vorzugsweise mit 1 bis 4 C-Atomen) in beiden o-Stellungen zu jeder Aminogruppe enthalten. Für die Durchführung des RIM-Verfahrens werden allgemein Diamine bevorzugt, die bei Raumtemperatur flüssig und mit den Polyhydroxyverbindungen in beliebigen Mengenverhältnissen, insbesondere mit Polyhydroxypolyäthern, mischbar sind. Besonders bevorzugt in diesem Zusammenhang wird die Verbindung 1 - Methyl - 3,5 - diäthyl - 2,4 - diaminobenzol oder ein Gemisch dieser Verbindung mit 1 - Methyl - 3,5 - diäthyl - 2,6 - diaminobenzol.

Die Katalysatoren (c), die ebenfalls für die Erfindung wesentlich sind und ohne die es nicht möglich ist, in der Form schnell erstarrende Formteile mit technisch interessanten mechanischen Eigenschaften herzustellen, werden vorzugsweise aus der für die Verwendung in der Polyurethanchemie bekannten Gruppe von organischen Metallverbindungen ausgewält. Gemäß der Erfindung werden vorzugsweise organische Zinnverbindungen, z.B. Zinn(II) - salze von Carbonsäuren (z.B. Zinn(II) - acetat, Zinn(II) - octoat, Zinn(II) - äthylhexoat oder Zinn(II) - laurat) und die Dialkylzinnsalze von Carbonsäuren (z.B. Dibutylzinndiacetat, Dibutylzinndilaurat, Dibutylzinnmaleat oder Dioctylzinndiacetat) entweder allein oder in der besonders bevorzugten Form eines Komplexes mit Amidinen, z.B. 2,3 - Dimethyl - 3,4,5,6 - tetrahydropyrimidin oder 2 - Methyl - 3 - cyclohexyl - 3,4,5,6 - tetrahydropyrimidin, Aminopyridinen, Aminopyrimidinen, Hydrazinopyridinen oder Hydrazinopyrimidinen, verwendet.

Weitere geeignete Katalysatoren sind beispielsweise die bekannten tertiären Amine, z.B. Triäthylamin, Tributylamin, N - Methylmorpholin, N - Äthylmorpholin, N - Cocomorpholin, N,N,N',N' - Tetramethyläthylendiamin, 1,4 - Diazabicyclo - (2,2,2) - octan, N - Methyl - N' - dimethylaminoäthylpiperazin, N,N - Dimethylbenzylamin, Bis - (N,N - diäthylaminoäthyl) - adipat, N,N - Diäthylbenzylamin, Pentamethyl-diäthylentriamin, N,N - Dimethylcyclohexylamin, N,N,N',N' - Tetramethyl - 1,3 - butandiamin, N,N - Dimethyl - $\beta$ - phenyläthylamin, 1,2 - Dimethylimidazol und 2 - Methylimidazol. Ein bevorzugter Katalysator dieses Typs ist 1,4 - Diaza - bicyclo - (2,2,2) - octan.

Als tertiäre Amine, die mit Isocyanaten reaktionsfähige Wasserstoffatome enthalten, eignen sich beispielsweise Triäthanolamin, Triisopropanolamin, N - Methyldiäthanolamin, N - Äthyldiäthanolamin und N,N - Dimethyläthanolamin. Reaktionsprodukte dieser Verbindungen mit Alkylenoxiden, z.B. Propylenoxid und/oder Äthylenoxid, sind ebenfalls geeignet.

Silaamine mit Kohlenstoff-Silicium-Bindungen, die beispielsweise in der DE—PS 1 229 290 beschrieben werden, können ebenfalls als Katalysatoren verwendet werden. Als Beispiele sind 2,2,4 - Trimethyl - 2 - silamorpholin und 1,3 - Diäthylaminomethyl - tetramethyldisiloxan zu nennen.

Basische Stickstoffverbindungen, z.B. Tetralkylammoniumhydroxide, Alkalihydroxide, z.B. Natriumhydroxid, Alkaliphenolate, z.B. Natriumphenolat, und Alkalialkoholate, z.B. Natriummethylat, können ebenfalls als Katalysatoren verwendet werden. Auch Hexahydrotriazine sind geeignete Katalysatoren.

Die vorstehend genannten Katalysatoren können allein (wobei beispielsweise 1,4 - Diaza - bicyclo - (2,2,2) - octan besonders bevorzugt wird) oder in Kombination mit organischen Metallverbindungen, insbesondere den vorstehend genannten organischen Zinnverbindungen, verwendet werden.

Weitere repräsentative Katalysatoren, die für die Zwecke der Erfindung verwendet werden können, und Einzelheiten über die Wirkung der Katalysatoren finden sich beispielsweise in "Kunststoff-Handbuch", Bd. VII, herausgegeben von Vieweg und Hochtlen, Carl Hanser-Verlag, München 1966, S. 96 bis 102.

Die Katalysatoren werden im allgemeinen in einer Menge von etwa 0,01 bis 10 Gew.-%, vorzugsweise von 0,05 bis 1 Gew.-%, bezogen auf die Menge der Verbindungen (b) verwendet.

Luft und/oder Stickstoff sind ebenfalls notwendig und werden in eine oder mehrere der Komponenenten nach bekannten Methoden eingeführt. Zur Zeit wird die Verwendung kommerzieller Methoden, z.B. Mischer des Typs⊛ "Diffusor Stone-KIMEX" und Venturimischer des in der DE—OS 25 44 559 beschriebenen Typs, bevorzugt.

Üblicherweise wird genügend Gas im Überschuß über die zur Sättigung der jeweiligen Komponente bei einem Füllbehälterdruck von 2,07 bis 3,45 bar erforderliche Menge in das System eingeführt. Bekanntlich fließt das Material aus dem Füllbehälter durch eine Zubringerpumpe (die den Druck der jeweiligen Komponente erhöht) durch eine Dosierpumpe in den Mischkopf. Die Förderdrücke der Zubringerpumpe liegen im allgemeinen im Bereich von 3,45 bis 6,9 bar, während die Austrittsdrücke der Dosierpumpe im allgemeinen im Bereich von 138 bis 207 bar liegen. Die Gasmenge im System wird im allgemeinen unter Verwendung handelsüblicher Meßgeräte überwacht, die auf Änderungen des spezifischen Gewichts der flüssigen Komponenten ansprechen. Ein Beispiel eines solchen Geräts ist das ® "Dynatrol" (Hersteller Automation Products). Diese Vorrichtung ermöglicht die wirksame Regelung des Gasgehalts durch Überwachung etwaiger Änderungen des spezifischen Gewichts der flüssigen Komponente.

Oberflächenaktive Zusatzstoffe (Emulgatoren und Schaumstabilisatoren) können gemäß der Erfindung ebenfalls verwendet werden. Beispiele geeigneter Emulgatoren sind die Natriumsalze von Ricinolsäuresulfonaten oder von Fettsäuren oder Salze von Fettsäuren mit Aminen, z.B. Ölsäurediäthylamin oder Stearinsäurediäthanolamin. Alkalioder Ammoniumsalze von Sulfonsäuren, z.B. Dodecylbenzolsulfonsäure oder Dinaphthylmethandisulphonsäure, oder von Fettsäuren, z.B. Ricinolsäure, oder von polymeren Fettsäuren können ebenfalls als oberflächenaktive Zusatzstoffe verwendet werden.

Die vorteilhaftesten Schaumstabilisatoren sind in erster Linie wasserlösliche Polyäthersiloxane. Diese Verbindungen enthalten im allgemeinen eine Polydimethylsiloxangruppe, die an ein Copolymerisat von Äthylenoxid und Propylenoxid gebunden ist. Schaumstabilisatoren dieser Art sind bekannt und werden beispielsweise in der US—PS 2 764 565 beschrieben.

Bekannte Zellgrößenregler, z.B. Paraffine oder Fettalkohole, oder Dimethylolpolysiloxane, Pigmente, Farbstoffe, flammwidrig machende Mittel, z.B. Bischloräthylphosphat oder Ammoniumphosphat und -polyphosphat, Stabilisatoren gegen Alterung und Witterung, Weichmacher und Fungistatika können ebenfalls gemäß der Erfindung verwendet werden.

Weitere Beispiele von oberflächenaktiven Zusatzstoffen, Schaumstabilisatoren, Zellgrößenreglern, Stabilisatoren, feuerhemmenden Mitteln, Weichmachern, Farbstoffen, Füllstoffen und fungistatischen und bakteriostatischen Mitteln, die in Rahmen der Erfindung verwendet werden können, und Einzelheiten über die Verwendung und Wirkung dieser Zusatzstoffe sind bekannt und finden sich in "Kunstoff Handbuch", Bd. VI, herausgegeben von Vieweg und Hochtlen, Carl Hanser-Verlag, München 1966, S. 103 bis 113.

Die beim Verfahren gemäß der Erfindung verwendete Menge des Polyisocyanats (Komponente (a)) wird vorzugsweise so berechnet, daß das schäumfähige Gemisch einen Isocyanatindex von 70 bis 130, insbesondere von 90 bis 110 hat. Unter "Isocyanatindex" ist der Quotient der Zahl der Isocyanatgruppen und der Zahl der mit Isocyanaten reaktionsfähigen Gruppen multipliziert mit 100 zu verstehen.

Das Verfahren gemäß der Erfindung wird nach der bekannten Reaktionsspritzgießtechnik (RIM-Verfahren) durchgeführt. Im allgemeinen können die Komponenten (a), (b) und (c) gleichzeitig gemischt werden, oder die nicht-reaktionsfähigen Komponenten können vorgemischt und dann mit den reaktionsfähigen Komponenten gemischt werden.

Eine Anfangstemperatur von 10 bis 50°C, vorzugsweise von 20° bis 30°C, wird für das in die Form eingeführte Gemisch gewählt. Die Temperatur der Form selbst beträgt im allgemeinen 40 bis 100°C, vorzugsweise 50 bis 70°C.

Obwohl durch die sehr schnelle Reaktion zwischen den Komponenten die Verwendung von Formentrennmitteln beispielsweise für die Entformung des Formteils aus polierten Metallformen überflüssig werden kann, können die bekannten Entformungsmittel auf Wachs- oder Siliconbasis gegebenenfalls verwendet werden. Ferner können bei der Durchführung des Verfahrens gemäß der Erfindung die bekannten Formentrennmittel, wie sie beispielsweise in den DE—OSen 1 953 637 und 2 121 670 beschrieben werden, ebenfalls verwendet werden.

Die nach dem Verfahren gemäß de Erfindung herstellbaren Formteile eignen sich besonders gut für die Herstellung von flexiblen Stoßstangen und Autokarosserieteilen. Bei geeigneter Änderung der Ausgangskomponenten, insbesondere bei Verwendung eines verhältnismäßig geringen Anteils des aktiven Diamins können auch Materialien mit hoher Abriebfestigkeit und hoher mechanischer Festigkeit, z.B. flexible Polyurethan-Schuhsohlen, hergestellt werden.

Die Erfindung wird durch die folgenden Beispiele weiter erläutert. In diesen Beispielen beziehen sich die Mengenangaben in Teilen und Prozentsätzen auf das Gewicht, falls nicht anders angegeben.

Beispiel 1

100 Gew.-Teile eines aus Glycerin, Propylenoxid und Äthylenoxid hergestellten Polyäthers mit einer OH-Zahl von 28,

21,5 Gew.-Teile eines Gemisches von 65 Gew.-Teilen 1 - Methyl - 3,5 - diäthylphenylen - 2,4 - diamin und

35 Gew.-Teile 1 - Methyl - 3,5 - diäthylphenylen - 2,6 - diamin,

weniger als 0,1 gew.-Teil Wasser und

0,1 Gew.-Teil eines Komplexes von 1 Mol Dibutylzinndilaurat und 1 Mol 2,3 - Dimethyl - 3,4,5,6 - tetrahydropyridin

wurden zu einem Polyolgemisch zusammengegeben. Das bei diesem Versuch verwendete Isocyanat war ein Reaktionsprodukt von Tripropylenglykol und 4,4' - Diphenylmethandiisocyanat (23 Gew.-% NCO).

Eine nickelplattierte Stahlform der Abmessungen 2,44 m×1,22 m×1,22 m (8'×4'×4') wurde verwendet. Das Polyolgemisch und das Isocyanat wurden mit einer handelsüblichen RIM-Dosiervorrichtung "HK 1000" dosiert und in einem handelsüblichen KRAUSS-MAFFEI-Mischkopf mit direktem Aufprall in einem Gewichtsverhältnis von etwa 50 Teilen Isocyanat pro 100 Teile Gemisch gemischt.

Das Isocyanat wurde bei einer Temperatur von etwa 32°C und das Gemisch bei 29°C gehalten. Die Temperatur der Form wurde bei 57°C gehalten, und die Verweilzeit in der Form betrug 30 Sekunden. Wie nachstehend erläutert werden wird, wurde die Dichte des Polyols bei jeder Beladungshöhe mit Stickstoff überwacht und geregelt. Die Dichte wurde mit einem als ®"DYNATROL" bekannten handelsüblichen Gerät gemessen, dessen Ausgangssignal auf Änderungen des spezifischen Gewichts eines Flüssigkeitsstroms anspricht.

Bei einem ersten Versuch wurde die Gasbeladung im Gemisch verändert, bis eine Anzeige von 1 V (entsprechend einer Mindestdichte des Gemisches von 0,65 g/cm³ bei Normaldruck) am Dichtemesser ®"DYNATROL" erhalten wurde. Wenn das Gemisch und das Isocyanat in der vorstehend genannten Weise bei einer Schußzeit von 2,38 Sekunden dosiert und gemischt wurden, wurde ein Formteil mit zahlreichen Oberflächenfehlern (und einem kleinsten spezifischen Gewicht von 1,04) erhalten.

Bei einem zweiten Versuch, bei dem mit dem gleichen Durchsatz (etwa 1,36 kg/Sek.), gleicher Schußzeit, gleichen Temperaturen und gleicher Anzeige des Dichtemessers ®"DYNATROL" gearbeitet wurde, jedoch 0,3 Teile eines handelsüblichen Rußes einer Teilchengröße von 25 m$\mu$m und einer Oberfläche von ca. 180 m²/g. (Hersteller Monochem Corporation) dem Gemisch pro 100 Gew.-Teile Gemisch zugesetzt wurden, wurde ein Formteil mit einem spezifischen Gewicht von etwa 1,01 erhalten. Oberflächenfehler waren nicht feststellbar. Aus diesem Versuch wurde geschlossen, daß der Zusatz von Ruß das Ausfüllen der Form und die Bildung eines Produkts mit niedrigerem spezifischem Gewicht und ohne Oberflächenfehler ermöglichte.

Beispiel 2

Der in Beispiel 1 beschriebene zweite Versuch wurde wiederholt, jedoch mit einer Anzeige des Dichtemessers ®"DYNATROL" von 0,2 V (d.h. eine größere Gasmenge wurde verwendet). Auch hier hatte das erhaltene Formteil keine sichtbaren Oberflächenfehler.

Um die Verwendung von Ruß im großtechnischen Betrieb annehmbar zu bewerten, wurde dieser Versuch mit der Anzeige des Dichtmessers ®"DYNATROL" von 0,2 V zehnmal kontinuierlich wiederholt. Nach jedem Schuß wurde das gebildete Formteil entformt und die Oberfläche der Form mit einem im Handel erhältlichen Formentrennmittel, einem Stearat in einem Isopropanol-Wasser-Gemisch bestrichen. Zwischen den einzelnen Füllvorgängen wurde die Form nicht poliert. Selbst nach dem Spritzen des zehnten Formteils wurden keine Oberflächenfehler festgestellt. Ohne Ruß war dies unter den gleichen Spritzbedingungen nicht möglich, da die Intensität der Oberflächenfehler nach wenigen aufeinanderfolgenden Schuß-Spritz-Vorgängen zunahm.

Beispiel 3

Bei diesem Versuch wurden das gleiche Polyol, das gleiche aktive Amin und das gleiche Isocyanat wie in Beispiel 1, jedoch in Mengen, die 32 Teilen, 18 Teilen bzw. 47 Teilen entsprachen, verwendet. Als Katalysatoren wurden 0,33 Teile Triäthylendiamin und 0,01 Teile Dibutylzinndilaurat verwendet. Die verwendete Form hatte die Gestalt eines Teils eines PINTO-Vorderscheinwerfers. Sie bestand aus nickelplattiertem Stahl und hatt die ungefähren Abmessungen 122×7,6×61 cm (4'×3"×2').

Eine Anzeige, die einem spezifischen Gewicht von 0,977 bei 3,45 bar entsprach, wurde am Dichtmesser "DYNATROL"gewählt. Die gleichen Dosier- und Mischvorrichtungen wie in Beispiel 1 wurden verwendet. Nach einer Schußzeit von 1,15 Sekunden bie einem Durchsatz von 1,36 kg/Sek. wurde ein Formteil gebildet, das ungleichmäßige Dichten, insbesondere in den Bereichen, die von der Eintrittsstelle des Gemisches in die Form am weitesten entfernt waren, aufwies. Unvollständiges Ausfüllen wurde an den Stellen, die von der Eintrittsstelle des Gemisches in die Form am weitesten entfernt waren, festgestellt.

Unter den gleichen Bedingungen, jedoch unter Zugabe von 0,1 Teil eines handelsüblichen Rußes mit einer Oberfläche von ca. 180 m²/g (SPEZIAL BLACK 4—Degussa) bei der gleichen Anzeige des Dichtmessers ®"DYNATROL" konnte ein einwandfreies Formteil mit gleichmäßiger Dichte nach einer Schußzeit von nur 1,10 Sekunden beim gleichen Durchsatz von 1,36 kg/Sek. erhalten werden. Dies bedeutete eine Materialersparnis von mehr als 5%.

Beispiele 4 bis 19

Um die Eignung verschiedener anorganischer Stickstoffadsorptionsmittel zu untersuchen, wurden die nachstehend beschriebenen Versuche durchgeführt. In jedem Fall wurden 180 Teile des in Beispiel 1 genannten Gemisches in ein geschlossenes Gefäß gefüllt und bei einer Temperatur von 25°C gehalten. Stickstoff wurde in das System eingeführt und das Gefäß unter einem Druck von 5,2 bar gehalten. Unmittelbar nach dem Aufdrücken wurde das Gefäß, das das Gemisch enthielt, für eine Zeit

**0 004 640**

von 10 Minuten bewegt. Der Druck wurde dann entspannt und das Gefäß geöffnet. Sein Inhalt wurde unmittelbar in ein zweites Gefäß gegossen, das mit einem Hydrometer zur Messung des spezifischen Gewichts der Flüssigkeit versehen war. Die Anzeige des spezifischen Gewichts wurde während einer Zeit von 8 Minuten alle 30 Sekunden notiert. In jedem Fall wurde der Zusatzstoff in einer Menge von 0,5 Teilen pro 100 Teile Gemisch verwendet.

In jedem Fall fiel die Hydrometeranzeige in Abhängigkeit von der Zeit. Dies entsprach dem Übergang des Gases aus dem gelösten Zustand in den dispergierten Zustand im flüssigen Polyol. Die Anfangsdichte des Systems, in dem im wesentlichen das gesamte Gas im gelösten Zustand vorlag, betrug in jedem Fall 1,021 g/cm³. Dies ist mit der Dichte des flüssigen Polyols bei 25°C ohne jedes Gas identisch. Dies bedeutet, daß der Einfluß des gelösten Gases auf das spezifische Gewicht des Polyols vernachlässigbar ist. Dispergiertes Gas senkt natürlich das spezifische Gewicht der Flüssigkeit.

Die Hydrometeranzeige in Abhängigkeit von der Zeit wurde für das Grundpolyol mit der gleichen Anzeige für jeden der Zusatzstoffe durch Berechnen der Änderung des spezifischen Gewichts mit der Zeit von einem angenommenen Anfangswert von 1,021 g/cm³ bis zu dem Wert nach 3 Minuten wie folgt verglichen:

$$\text{Geschwindigkeit} = \frac{1{,}021 - \text{SG 3 Min.}}{\text{3 Min.}} = \frac{\Delta \text{SG}}{\Delta t}$$

worin $\delta_{3\ \text{Min.}}$ = spezifisches Gewicht nach 3 Minuten.

Es ist zu bermerken, daß bei allen Versuchen die Änderung des spezifischen Gewichts währen der ersten drei Minuten den größten Teil der gesamten Änderung ausmachte. Diese Geschwindigkeit für das Polyol mit Zusatzstoff wurde dann mit dem Grundpolyol verglichen, wobei die prozentuale Steigerung der Geschwindigkeit der Änderung des spezifischen Gewichts wie folgt ermittelt wurde:

$$\text{Anstieg der Geschwindigkeit in \%} = \frac{\text{Geschwindigkeit} - \text{Geschwindigkeit ohne Zusatz}}{\text{Geschwindigkeit ohne Zusatz}}$$

Je höher der prozentuale Anstieg der Änderungsgeschwindigkeit des spezifischen Gewichts, umso wirksamer steigerte der Zusatzstoff die Wirksamkeit des Treibmittels. Die Ergebnisse sind in der nachstehenden Tabelle genannt.

Die folgenden in der Tabelle genannten Zusatzstoffe wurden verwendet:

Handelsübliche *Aktivkohle* "CHARCOAL PWA"
(Hersteller Pittsburgh Activated Carbon):
Teilchengröße 65 bis 75% ⩽ 44 $\mu$m;
Gesamtoberfläche 1000 bis 1100 m²/g ($N_2$-BET-Methode).

Handelsübliche *Aktivkohle* "CHARCOAL BPL"
(Hersteller Pittsburgh Activated Carbon):
Oberfläche 1050 bis 1150 m²/g;
Scheinbare Dichte (Schüttgewicht, dichte Packung) 0,48 g/cm³;
Tatsächliche Dichte (He-Verdrängung 2,1 g/cm³.

Handelsübliche *Aktivkohle* "CHARCOAL PCB"
(Hersteller Pittsburgh Activated Carbon):
Oberfläche 1150—1250 m²/g;
Scheinbare Dichte 0,44 g/cm³;
Tatsächliche Dichte 2,2 g/cm³.

Handelsübliche *Aktivkohle* "CHARCOAL RB"
(Hersteller Pittsburgh Activated Carbon):
Oberfläche 1150 bis 1350 m²/g;
Scheinbare Dichte 0,41 g/cm³;
Tatsächliche Dichte 2,35 g/cm³;
Teilchengröße 65 bis 75% 44 $\mu$m.

Handelsübliches *Eisenoxid-Rotpigment* ®BAYFERROX 130 RED
(Hersteller Mobay Chemical Corporation):
Überwiegende Teilchengröße 0,17 $\mu$m;
Oberfläche: 12 m²/g;
Rückstand auf 44 $\mu$m-Sieb 0,05%;
$Fe_2O_3$-Gehalt 95 bis 97%.

9

Handelsübliches *Eisenoxid-Rotpigment* ®BAYFERROX 130 M RED
Gleiches Rotpigment wie "130 RED" mit der gleichen aktiven Oberfläche, jedoch mit einem
Rückstand von weniger als 0,001% auf dem 44 $\mu$m-Sieb;
$Fe_2O_3$-Gehalt 95 bis 97%.

Handelsübliches *Eisenoxid-Rotpigment* ®BAYFERROX 180 M RED
(Hersteller Mobay Chemical Corporation):
Überwiegende Teilchengröße 0,70 $\mu$m;
Rückstand auf 44 $\mu$m-Sieb <0,001%;
$Fe_2O_3$-Gehalt 96,97%;
Oberfläche 4,3 m²/g.

*Eisenoxid-Rotpigment* ®BAYFERROX 110 M RED
(Hersteller Mobay Chemical Corporation):
Überwiegende Teilchengröße 0,09 $\mu$m;
Rückstand auf 44 $\mu$m-Sieb <0,001%;
$Fe_2O_3$-Gehalt 94 bis 96%;
Oberfläche: 18,3 m²/g.

*Eisenoxid-Schwarzpigment* ®BAYFERROX 318 BLACK
(Hersteller Mobay Chemical Corporation):
Überwiegende Teilchengröße 0,2 $\mu$m;
Rückstand auf 44 $\mu$m-Sieb 0,1%;
$Fe_2O_3$-Gehalt 93 bis 95%;
Oberfläche: 17,9 m²/g.

*Eisenoxid-Gelbpigment* ®BAYFERROX 420 YELLOW
(Hersteller Mobay Chemical Corporation):
Überwiegende Teilchangröße 0,1×0,7 $\mu$m;
Rückstand auf 44 $\mu$m-Sieb 0,05%;
$Fe_2O_3$-Gehalt 86 bis 87%;
Oberfläche: 13,5 m²/g.

*Eisenoxid-Gelbpigment* ®BAYFERROX 910 YELLOW
(Hersteller Mobay Chemical Corporation),
Überwiegende Teilchengröße 0,1×0,6 $\mu$m;
Rückstand auf 44 $\mu$m-Sieb 0,039%;
$Fe_2O_3$-Gehalt 85 bis 87%;
Oberfläche: 22,7 m²/g.

*Ruß* DEGUSSA:
Rückstand auf 44 um-Sieb 0,05%;
Mittlere Teilchengröße 25 $\mu$m;
Oberfläche (BET-Methode) 180 m²/g.

*Siliciumdioxid* ®SYLOID 244
(Davison Chemical Division of Grace Industrial Chemicals):
Oberfläche 310 m²/g;
Mittlere Teilchengröße 4 $\mu$m;
Dichte 0,112 g/cm³.

*Zeolithpulver* ®SYLOSIL 120 aus kristallinem Natriumaluminiumsilicat
(Hersteller Davison Chem.):
Mittlere Teilchengröße 2 bis 3 $\mu$m;
Schüttgewicht 0,481 g/cm³;
Oberfläche: 500 m²/g.

*Talkum* ®MISTRON VAPOR
(Cyprus Industrial Minerals Co.):
Mittlere Teilchengröße 1,5 $\mu$m;
Oberfläche 17 m²/g.

| Zusatzstoff | Spezif. Gewicht nach 3 Minuten | $\frac{\Delta SG}{\Delta t}$ | Zunahme der Änderungsgeschwindigkeit des spezifischen Gewichts, % |
|---|---|---|---|
| Ohne Zusatzstoff | 0,933 | 0,0293 | — |
| Aktivkohle PWA | 0,775 | 0,0820 | 179,9 |
| Aktivkohle BPL | 0,797 | 0,0747 | 154,9 |
| Aktivkohle PCB | 0,835 | 0,0620 | 111,6 |
| Aktivkohle RB | 0,828 | 0,0643 | 119,6 |
| Rotpigment 130 | 0,818 | 0,0676 | 130,9 |
| „ 130 M | 0,844 | 0,0590 | 101,4 |
| „ 180 M | 0,910 | 0,0370 | 26,3 |
| „ 110 M | 0,905 | 0,0307 | 32,1 |
| Gelbpigment 910 | 0,870 | 0,0503· | 71,8 |
| „ 420 | 0,917 | 0,0347 | 18,4 |
| Schwarzpigment 318 | 0,924 | 0,0323 | 10,3 |
| Ruß | 0,903 | 0,0393 | 34,1 |
| Siliciumdioxid | 0,870 | 0,0503 | 71,8 |
| Zeolith | 0,868 | 0,0510 | 74,1 |
| Talkum | 0,909 | 0,0373 | 27,3 |

**Patentansprüche**

1. Verfahren zur Herstellung von elastomeren Formteilen, wobei man
A) in eine geschlossene Form ein Reaktionsgemisch einführt, das
   a) ein organisches Polyisocyanat,
   b) eine Hydroxylgruppen enthaltende Verbindung mit einem Molekulargewicht von 1800 bis 12.000,
   c) einen Katalysator für die Reaktion zwischen Hydroxylgruppen und Isocyanatgruppen,
   d) ein aktives aromatisches Diamin mit wenigstens einem Alkylsubstituenten in o-Stellung zu einer ersten Aminogruppe und zwei Alkylsubstituenten in o-Stellung zu einer zweiten Gruppe und
   e) Luft und/oder Stickstoff, die bzw. der unter Druck in einer oder mehreren der Komponenten (a), (b), (c) oder (d) gelöst sind,
   enthält,
B) das Reaktionsgemisch in der Form reagieren läßt und
C) das gebildete Produkt entformt,
dadurch gekennzeichnet, daß man zusätzlich zur Beschleunigung des Übergangs der Luft und/oder des Stickstoffs aus dem gelösten Zustand in den dispergierten Zustand bei der Entspannung des Drucks 0,01 bis 1 Gewichts-%, bezogen auf die Menge der Komponente (b), eines anorganischen feinteiligen, Stickstoff adsorbierenden Mittels verwendet, das einer der Komponenten (a), (b), (c), oder (d), die die Luft und/oder den Stickstoff gelöst enthält, zugesetzt wird.

2. Verfahren nach Anspruch 1, dadurch gekennzeichnet, daß man als Adsorptionsmittel Aluminiumoxide, Siliciumdioxide, Kohlenstoffe und/oder Eisenoxide verwendet.

3. Verfahren nach Anspruch 1 und 2, dadurch gekennzeichnet, daß das Adsorptionsmittel eine Oberfläche von mehr als 10 m²/g hat.

4. Verfahren nach Anspruch 1 bis 3, dadurch gekennzeichnet, daß man die Komponente (d) in einer Menge von 5 bis 75 Gew.-%, bezogen auf die Menge der Komponente (b), verwendet.

5. Verfahren nach Anspruch 1 bis 4, dadurch gekennzeichnet, daß man die Mengen der Reaktionsteilnehmer so wählt, daß das Gemisch einen Isocyanatindex von 70 bis 130 hat.

**Revendications**

1. Procédé de préparation de pièces moulées èlastomères dans lequel:
A) On introduit dans un moule fermé un mélange de réaction contenant:
   a) un polyisocyanate organique,
   b) un composé contenant des groupes hydroxy et présentant un poids moléculaire de 1.800 à 12.000,
   c) un catalyseur pour la réaction entre les groupes hydroxy et les groupes isocyanate,
   d) une diamine aromatique active portant au moins un substituant alkyle en position ortho d'un premier groupe amino et deux substituants alkyle en position ortho d'un deuxième groupe amino et
   e) de l'air et/ou de l'azote, dissous sous pression dans un ou plusieurs des composants (a), (b), (c) ou (d),

B) On laisse réagir le mélange de réaction dans le moule et

C) On démoule le produit formé,

caractérisé en ce que l'on utilise en outre, pour accélérer le passage de l'air et/ou de l'azote de l'état dissous à l'état dispersé à la détente de la pression, de 0,01 à 1% en poids, par rapport à la quantité du composant (b), d'un agent minéral en fines particules adsorbant l'azote, ajouté à l'un des composants (a), (b), (c) ou (d) qui contient l'air et/ou l'azote à l'état dissous.

2. Procédé selon la revendication 1, caractérisé en ce que l'on utilise comme agents adsorbants des alumines, des silices, des carbones et/ou des oxydes der fer.

3. Procédé selon les revendications 1 et 2, caractérisé en ce que l'agent adsorbant présente une surface spécifique supérieure à 10 m²/g.

4. Procédé selon les revendications 1 à 3, caractérisé en ce que l'on utilise le composant (d) en quantité de 5 à 75% en poids par rapport à la quantité du composant (b).

5. Procédé selon les revendications 1 à 4, caractérisé en ce que l'on choisit les quantités des réactifs de manière que le mélange présente un indice d'isocyanate de 70 à 130.

## Claims

1. A process for the production of elastomeric mouldings in which

A) a reaction mixture is introduced into a closed mould, which reaction mixture contains

    a) an organic polyisocyanate,

    b) a hydroxyl-group-containing compound having a molecular weight of from 1800 to 12,000,

    c) a catalyst for the reaction between hydroxyl groups and isocyanate groups,

    d) an active aromatic diamine having at least one alkyl substituent in the o-position to a first amino group and two alkyl substituents in o-position to a second group and

    e) air and/or nitrogen dissolved under pressure in one or more of components (a), (b), (c) or (d),

B) the reaction mixture is allowed to react in the mould and

C) the resultant product is removed from the mould,

characterised in that, in addition, in order to accelerate the transition of the air and/or nitrogen from the dissolved state into the dispersed state, when releasing the pressure 0.01 to 1% by weight, based on the amount of component (b), of an inorganic, finely divided, nitrogen-adsorbing agent is used, which is added to óne of the components (a), (b), (c) or (d) which contains the air and/or the nitrogen dissolved therein.

2. Process according to Claim 1, characterised in that aluminium oxides, silicon dioxides, carbons and/or iron oxides are used as the adsorbing agent.

3. Process according to Claim 1 and 2, characterised in that the adsorbing agent has a surface area of more than 10 m²/g.

4. Process according to Claim 1 to 3, characterised in that component (d) is used in an amount of from 5 to 75% by weight, based on the amount of component (b).

5. Process according to Claim 1 to 4, characterised in that the amounts of the reactants are selected so that the mixture has an isocyanate index of from 70 to 130.